Europäisches Patentamt

European Patent Office

Office européen des brevets

(11) Veröffentlichungsnummer: **0 224 888**
**A2**

## (12) EUROPÄISCHE PATENTANMELDUNG

(21) Anmeldenummer: 86116580.1

(22) Anmeldetag: 28.11.86

(51) Int. Cl.⁴: **H02G 15/18 , H02G 15/113**

(30) Priorität: 02.12.85 DE 3542546

(43) Veröffentlichungstag der Anmeldung:
**10.06.87 Patentblatt 87/24**

(84) Benannte Vertragsstaaten:
**AT BE CH DE FR GB IT LI NL SE**

(71) Anmelder: **Siemens Aktiengesellschaft Berlin
und München
Wittelsbacherplatz 2
D-8000 München 2(DE)**

(72) Erfinder: **Kunze, Dieter, Dipl.-Ing.
Rosenstrasse 10
D-8027 Neuried(DE)**
Erfinder: **Pichler, Klaus, Ing. (grad.)
Am Steigacker 14
D-8156 Otterfing(DE)**
Erfinder: **Rost, Jan
Lindenmoosweg 15
D-8131 Traubing(DE)**
Erfinder: **Häder, Wolfgang
Hoflacherstrasse 29
D-8131 Eichenau(DE)**

(54) **Kabelmuffe mit elastischen Dichtungselementen.**

(57) Bei der Erfindung handelt es sich um eine Kabelmuffe mit Dichtungselementen (1a, 1b, 1c), die als zugfeste Dichtungsschnüre ausgebildet sind und die jeweils aus einem Kern (2a, 2b, 2c) aus Silikonkautschuk und einer Ummantelung (3a, 3b, 3c) bestehen, wobei die Ummantelung (3a, 3b, 3c) härter ist als der Kern (2a, 2b, 2c).

## FIG 1

EP 0 224 888 A2

## Kabelmuffe mit elastischen Dichtungselementen.

Die Erfindung betrifft eine Kabelmuffe mit Dichtungselementen aus elastischem Werkstoff.

Dichtungselemente aus elastischem Material, die als Dichtungsschnüre ausgebildet sind, werden vielfach verwendet, doch wirft die Wasserdichtigkeit und die Zugfestigkeit mitunter große Probleme auf. Bei nicht zugfesten Dichtungsschnüren wird der Querschnitt der Dichtungselemente durch Zug beim Einlegen zwangsweise verändert, so daß die Dichtwirkung nicht voll gewährleistet werden kann. Dabei ergeben sich über die ganze Dichtung hinweggesehen verschiedene Querschnitte, die zu Störungen im Dichtungssystem führen können. Andererseits ist auch die Wasserdampfdurchlässigkeit insbesondere bei Kabelgarnituren von großer Bedeutung. Doch sind elastische Dichtungselemente, die sich mit geringeren Schließkräften einsetzen lassen, meist nicht wasserdampfundurchlässig, so daß sie in dieser Weise für den Einsatz in Kabelgarnituren nur bedingt in Betracht kommen.

Aufgabe der Erfindung ist nun, eine Kabelmuffe mit elastischen Dichtungselementen zu schaffen, die aufgrund von zugfesten und weitgehend wasserdampfundurchlässigen Dichtungselementen auch in den Dichtungsbereichen ausreichend wasserdampfundurchlässig ist. Die gestellte Aufgabe wird nun gemäß der Erfindung mit der Kabelmuffe der eingangs beschriebenen Art dadurch gelöst, daß die Dichtungselemente als zugfeste Dichtungsschnüre ausgebildet sind und daß die Dichtungselemente jeweils aus einem Kern aus Silikonkautschuk und aus einer Ummantelung bestehen, wobei die Ummantelung härter ist als der Kern.

Insbesondere sind die Dichtungselemente auch bei der Kabelmuffe nach Patent .. .. ... - (Patentanmeldung P 35 36 599.4) einsetzbar, wobei diese Kabelmuffe stirnseitige Dichtungskörper und ein längsgeschlitztes Muffenrohr aufweist und wobei letzteres über Dichtungen auf die Dichtungskörper aufgepreßt und mittels eines längsseitig entlang des Schlitzes verlaufenden Klemmverschlusses dichtend fixiert ist. Die Dichtungselemente bestehen aus elastischem Werkstoff und sind als stirnseitige Ringdichtungen und als Längsdichtung in ihrer Lage vor der Montage fixierbar und in ihrer Flexibilität so ausgestaltet, daß der Klemmverschluß bezüglich der Muffenrohrlängsränder und der darauf wirkenden Kraftschlußelemente unter Einhaltung des geforderten Schließdruckes mit gebräuchlichen Werkzeugen verspannbar ist.

Diese Dichtungselemente gemäß der Erfindung haben nun gegenüber dem Stand der Technik Vorteile, da sie als wiederverwendbare weichelastische Dichtungen nur mit sehr geringen Schließkräften beaufschlagt werden müssen. Dabei werden sie nicht bleibend verformt, sind alterungsstabil und chemisch beständig, gegen Mikroorganismen resistent und besitzen sehr gute Eigenschaften bezüglich der Wasserdampfundurchlässigkeit. Silikonkautschuk, aus dem die erfindungsgemäßen Dichtungselemente im Kern bestehen, hat nun die besten elastischen Eigenschaften und erfüllt auch die anderen Forderungen sehr gut bis auf die Forderung nach hoher Wasserdampfundurchlässigkeit. Um nun auch diese Forderung zu erfüllen, wurde gemäß der Erfindung der Silikonkautschuk mit anderen geeigneten Stoffen kombiniert, so daß mit einer Verbunddichtung alle Forderungen erfüllt werden können. Dabei wird außerdem die Längszugfestigkeit erhöht, die bei normaler Verwendung von weichelastischen Elastomeren nicht gegeben ist. Die zweite, gegenüber dem Kern härtere Schicht der Dichtungselemente erhöht weiterhin die Gleiteigenschaften und verbessert somit den Einlegevorgang, so daß eine Dehnung kaum erfolgen kann. Dehnungsunterschiede der Dichtungselemente durch unterschiedliche Längsdehnung treten somit nicht mehr auf.

Verwendet wird nun für den Kern der Dichtungselemente gemäß der Erfindung das Material Silikonkautschuk mit einer Härte Shore A < 60, vorzugsweise jedoch < 40. Die Ummantelung besteht nun aus einem Material, das in jedem Fall härter ist als das Kernmaterial und die erforderlichen "Ergänzungseigenschaften" aufweist. Hierfür eignen sich vernetzte Elastomere, wie zum Beispiel Polysulfid-, Polychloropren-oder Butadien-Kautschuk. Weiterhin eignen sich für die Ummantelung Polymere, wie zum Beispiel Polyäthylen oder hochmolekulares Polyisobutylen. Außerdem kann für die Ummantelung auch ein thermoplastischer Kautschuk verwendet werden. Für besonders gute Wasserdampfundurchlässigkeit können auch Metallfolien als Beschichtung aufgebracht werden, wie zum Beispiel Aluminiumfolien.

Je nach dem Dichtungssystem, in welchem die Dichtungselemente gemäß der Erfindung eingesetzt werden, können voll-oder teilummantelte Dichtungselemente verwendet werden. Bei Teilummantelungen verwendet man vorzugsweise Profile für die Ummantelung, durch die sie in - schnappender bzw. rastender Weise auf den Kern haftend aufgebracht werden können. Bei Vollummantelung wählt man vorzugsweise haftfeste Ummantelungen. Bei metallischen Ummantelungen für besonders gute Wasserdampfundurchlässigkeit werden aluminiumkaschierte bzw. kunststoffkaschierte Folien verwendet.

Die Ummantelungen werden vorzugsweise in einer Stärke aufgebracht, die etwa 2 bis 20 % des Kerndurchmessers beträgt, so daß die Elastizität des Kernes in ausreichender Weise erhalten bleibt. Bei Ummantelungen aus Metallfolien oder Metallbeschichtungen ist jedoch die Stärke in der üblichen Folienstärke ausreichend.

Die Dichtungselemente gemäß der Erfindung werden nun bei Vollummantelung durch Zweifachextrusion, durch Umspritzen oder Umpressen des bereits extrudierten Kernes hergestellt. Bei Teilummantelung kann zum Beispiel eine aufschnappbare Ummantelung besser gewählt sein.

Bei all solchen Dichtungselementen können zum Beispiel permeationsdichte Schichten als Zwischenschichten zwischen dem Kern und der eigentlichen Ummantelung eingebracht werden, durch die sich ein besonders guter Permeationsschutz erreichen läßt.

Die Erfindung wird nun anhand von vier Figuren näher erläutert.

Figur 1 zeigt als Beispiel eine Rahmendichtung, die aus den erfindungsgemäßen Dichtungselementen zusammengesetzt werden kann.

Figur 2 zeigt im Querschnitt den Aufbau eines zylindrischen Dichtungselementes.

Figur 3 zeigt ein Dichtungselement mit rechteckigem Querschnitt.

Figur 4 verdeutlicht die Teilummantelung eines Kernes.

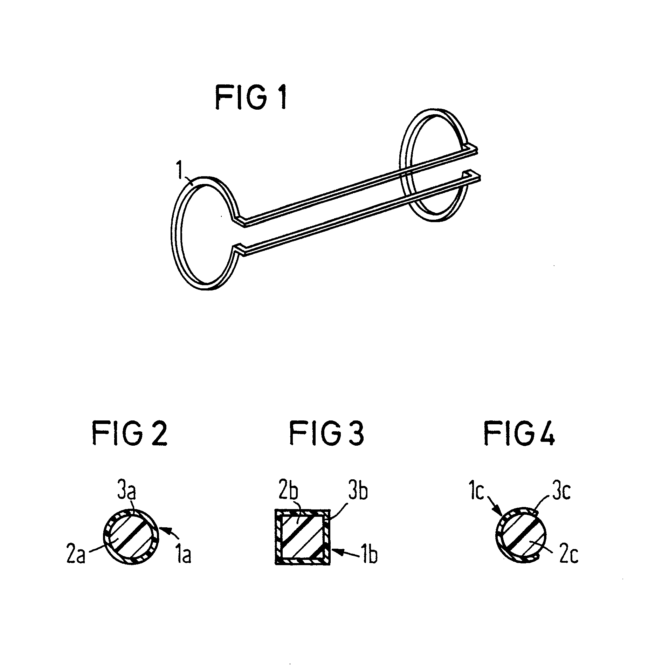

Die Figur 1 zeigt ein Ausführungsbeispiel für eine endlose Dichtungseinlage 1, die aus erfindungsgemäßen Dichtungselementen hergestellt ist. Die beiden seitlichen kreisförmigen Teile dienen zur Abdichtung des Spaltes zwischen den zylindrischen Dichtungskörpern und dem umgebenden längsgeteilten Muffenrohr. Die längsgerichteten Dichtungsteile werden in das Dichtungssystem des Längsverschlusses eingelegt und gewährleisten den dichten Längsabschluß.

Figur 2 zeigt den Aufbau eines Dichtungselementes 1a mit kreisförmigem Querschnitt, das aus einem weichelastischen Kern 2a, vorzugsweise aus Silikonkautschuk, und einer Ummantelung 3a aus einem oder mehreren der beschriebenen Materialien mit "Ergänzungseigenschaften" besteht.

Figur 3 zeigt als Ausführungsbeispiel ein Dichtungselement 1b mit rechteckigem Querschnitt und mit entsprechendem Kern 2b und der Ummantelung 3b.

Figur 4 erläutert ein teilummanteltes Dichtungselement 1c, aus einem Kern 2c mit beispielsweise kreisförmigem Querschnitt und einer etwa halbzylindrischen Ummantelung 3c, wobei die Ummantelung 3c soweit reicht, daß der Kern 2c in rastender Weise umfaßt ist.

Diese Beispiele stehen stellvertretend für Dichtungselemente beliebiger Querschnitte, die den entsprechenden Dichtungssystemen angepaßt sind.

Die Zugfestigkeit der Dichtungselemente kann zusätzlich durch Einlagerung von zugfesten Elementen, wie Drähten, Geweben oder Fasern aus verschiedensten zugfesten Werkstof fen, erhöht werden. Diese Einlagerungen verlaufen in Achsrichtung der Dichtungselemente und verhindern somit die Längsdehnung zum Beispiel beim unsachgemäßen Einlegen der Dichtungselemente in die vorgesehenen Dichtungsnuten.

## Ansprüche

1. Kabelmuffe mit Dichtungselementen aus elastischem Werkstoff, insbesondere nach Patent .. .. ... (Aktenzeichen P 35 36 599.4), **dadurch gekennzeichnet**, daß die Dichtungselemente (1a, 1b, 1c) als zugfeste Dichtungsschnüre ausgebildet sind und daß die Dichtungselemente (1a, 1b, 1c) jeweils aus einem Kern (2a, 2b,2c) aus Silikonkautschuk und einer Ummantelung (1a, 1b, 1c) bestehen, wobei die Ummantelung (3a, 3b, 3c) härter ist als der Kern (2a, 2b, 2c).

2. Kabelmuffe nach Anspruch 1, **dadurch gekennzeichnet**, daß das Material des Kernes (2a, 2b, 2c) eine Härte Shore A < 60, vorzugsweise < 40 aufweist.

3. Kabelmuffe nach einem der vorhergehenden Ansprüche, **dadurch gekennzeichnet**, daß die Ummantelung (3a, 3b, 3c) aus elastischem Material besteht, vorzugsweise aus einem vernetzten Elastomer, wie Polysulfid-, Polychloropren-oder Butadien-Kautschuk.

4. Kabelmuffe nach einem der Ansprüche 1 oder 2, **dadurch gekennzeichnet**, daß die Ummantelung (2a, 2b, 2c) aus einem thermoplastischen Kautschuk besteht.

5. Kabelmuffe nach einem der Ansprüche 1 oder 2, **dadurch gekennzeichnet**, daß die Ummantelung (2a, 2b, 2c) aus einem Polymer, vorzugsweise aus Polyäthylen oder hochmolekularem Polyisobuthylen besteht.

6. Kabelmuffe nach einem der Ansprüche 1 oder 2, **dadurch gekennzeichnet**, daß die Ummantelung (2a, 2b, 2c) aus einer permeationsdichten Folie besteht.

7. Kabelmuffe nach Anspruch 6, **dadurch gekennzeichnet**, daß die Folie aus Aluminium besteht.

8. Kabelmuffe nach einem der vorhergehenden Ansprüche, **dadurch gekennzeichnet**, daß der Kern (2a, 2b) voll ummantelt ist.

9. Kabelmuffe nach einem der Ansprüche 1 bis 7, **dadurch gekennzeichnet**, daß der Kern (2c) mit teilweiser Ummantelung (3c) versehen ist.

10. Kabelmuffe nach einem der vorhergehenden Ansprüche, **dadurch gekennzeichnet**, daß die Ummantelung (3a, 3b, 3c) lose über dem Kern (2a, 2b, 2c) angeordnet ist.

11. Kabelmuffe nach einem der Ansprüche 1 bis 9, **dadurch gekennzeichnet**, daß die Ummantelung (3a, 3b, 3c) haftfest über dem Kern angeordnet ist.

12. Kabelmuffe nach einem der vorhergehenden Ansprüche, **dadurch gekennzeichnet**, daß zwischen dem Kern (2a, 2b, 2c) und der Ummantelung (3a, 3b, 3c) eine permeationsdichte Schicht aneordnet ist.

13. Kabelmuffe nach einem der vorhergehenden Ansprüche, **dadurch gekennzeichnet**, daß die Dichtungselemente (1a, 1b, 1c) durch Zweifachextrusion hergestellt sind.

14. Kabelmuffe nach einem der Ansprüche 1 bis 12, **dadurch gekennzeichnet**, daß die Ummantelung (3a, 3b, 3c) durch Umpressen des extrudierten Kernes (2a, 2b, 2c) aufgebracht ist.

15. Kabelmuffe nach einem der Ansprüche 1 bis 12, **dadurch gekennzeichnet**, daß die Ummantelung (3a, 3b, 3c) durch Umspritzen des extrudierten Kernes (2a, 2b, 2c) aufgebracht ist.

16. Kabelmuffe nach Anspruch 7, **dadurch gekennzeichnet**, daß die Teilummantelung (3c) durch Aufschnappen auf den Kern (2c) aufgebracht ist.

17. Kabelmuffe nach einem der Ansprüche 1 bis 12, **dadurch gekennzeichnet**, daß die Ummantelung als Kaschierung, insbesondere mit Aluminium, aufgebracht ist.

18. kabelmuffe nach einem der vorhergehenden Ansprüche, **dadurch gekennzeichnet**, daß die Ummantelung (3a, 3b, 3c) eine Stärke von etwa 2 -20% des Kerndurchmessers aufweist.

19. Kabelmuffe nach einem der Ansprüche 1 - 17, **dadurch gekennzeichnet**, daß die Ummantelung aus Metallfolien oder Metallbeschichtungen in üblicher Folienstärke aufgebracht sind.

20. Kabelmuffe nach einem der vorhergehenden Ansprüche, **dadurch gekennzeichnet**, daß zugfeste Elemente in Achsrichtung der Dichtungselemente (1a, 1b, 1c) eingelagert sind.

# FIG 1

1

# FIG 2

3a
2a
1a

# FIG 3

2b   3b
1b

# FIG 4

1c   3c
2c